Europäisches Patentamt

European Patent Office

Office européen des brevets

(19)

(11) Veröffentlichungsnummer: **0 000 941**
**B1**

(12) **EUROPÄISCHE PATENTSCHRIFT**

(21) Anmeldenummer: **78100727.3**

(51) Int. Cl.³: **C 08 L 67/06, C 08 K 5/00**

(54) Verdunstungsarme, gut Überlaminierbare, härtbare ungesättigte Polyesterharze

(30) Priorität: **29.08.77 DE 2738805**

(43) Veröffentlichungstag der Anmeldung:
**07.03.79 Patentblatt 79/05**

(45) Bekanntmachung des Hinweises auf die Patenterteilung:
**23.07.80 Patentblatt 80/15**

(84) Benannte Vertragsstaaten:
**DE FR GB NL SE**

(56) Entgegenhaltungen:
**DE - A - 2 554 930**
**DE - B - 1 156 230**
**FR - A - 1 113 351**

(73) Patentinhaber: **BASF Aktiengesellschaft**
**Carl-Bosch-Strasse 38**
**D - 6700 Ludwigshafen (DE)**

(72) Erfinder: **Gramlich, Walter**
**Seckenheimer Strasse 59**
**D - 6800 Mannheim 1 (DE)**
**Koser, Wolfang, Dr.**
**Taubengartenhohl 4a**
**D - 6718 Gruenstadt 1 (DE)**

Courier Press, Leamington Spa, England.

## Verdunstungsarme, gut überlaminierbare, härtbare ungesättigte Polyesterharze

Die Erfindung betrifft verdunstungsarme, in Gegenwart üblicher Polymerisationsinitiatoren härtbare, gut überlaminierbare ungesättigte Polyesterharze aus einem äthylenisch ungesättigten Polyester, einer copolymerisierbaren, äthylenisch ungesättigten monomeren Verbindung sowie gegebenenfalls weiterer Aufbaukomponenten und Hilfsstoffen, die zur Verminderung der Monomerverdunstung und zur Verbesserung der Überlaminierbarkeit Paraffingemische enthalten.

Form- und Preßmassen aus ungesättigten Polyesterharzen enthalten üblicherweise, außer ungesättigten Polyestern und damit copolymerisierbaren monomeren Vinylverbinddungen, Polymerisationsinitiatoren und Inhibitoren sowie häufig pulverförmige Füllstoffe und Glasfasern oder flächige Glasfasergebilde. Schrumpfarm härtbare Formmassen enthalten außerdem bis zu 30 Gewichtsprozent thermoplastische Polymere. Um klebfreie Produkte mit optimalen Fließverhalten bei den erforderlichen Aushärtungsbedingungen herzustellen, werden den Polyesterformmassen vor dem Vermischen mit Füllstoffen geringe Mengen feinteiliger Erdalkalioxide zugemischt. Dabei findet durch Salzbildung mit den Carboxylendgruppen des ungesättigten Polyesters und Komplexbildung eine Eindickung statt.

Durch den Zusatz der für die anwendungstechnische Verwertbarkeit unentbehrlichen flüchtigen, olefinisch ungesättigten Monomeren, wie Styrol, treten bei der Verarbeitung von ungesättigten, härtbaren Polyesterformmassen zwangsläufig bei allen Verarbeitungstechniken, beispielsweise beim Hand-, Faserspritz- oder Wickerverfahren, Monomerenverluste auf, sobald die ungesättigten, härtbaren Polyesterformmassen mit der Atmosphäre in Berührung kommen. Der Verlust an Monomeren ist nicht nur aus wirtschaftlichen Gründen unerwünscht, die Monomerenkonzentration in der Atmosphäre bedeutet auch eine Belästigung und Gefährdung des Verarbeiters am Arbeitsplatz, so daß die Monomerenkonzentration durch aufwendige technische Einrichtungen, wie Absaugvorrichtungen, intensive Belüftung usw., vermindert werden muß.

Aus der DE—PS 948 816 ist bekannt, daß Zusätze von wachsartigen Stoffen, beispielsweise Paraffin, zu ungesättigten, härtbaren Polyesterformmassen nicht nur die Verdunstung von olefinisch ungesättigten Monomeren, wie Styrol, sondern auch die polymerisationshemmende Wirkung des Sauerstoffs vermindern.

In der DE—OS 1 956 376 wird vorgeschlagen, auf ein Lackpolyesterharz kurz vor der Härtung einen wachsartigen Stoff, dessen Dispersion oder Lösung in dünner Schicht aufzubringen, wobei als Lösungsmittel für diese Sperrschichtbildner, die vorzugsweise aufgesprüht werden, Benzinkohlenwasserstoffe und Aromaten genannt werden. Nachteilig an diesem Verfahren ist, daß die Sperrschichtbildner in großen Mengen Lösungsmitteln gelöst — üblicherweise werden 1-gewichtsprozentige Lösungen der wachsartigen Stoffe verwendet — und die Lösungen in einem separaten Arbeitsgang auf die Filme der ungesättigten Lackpolyesterharze aufgebracht werden müssen. Zu beachten ist ferner, daß beim Beschichten des Lackfilms mit der sperrschichtbildnerhaltigen Lösung ein zu hoher Druck, eine zu hohe Temperatur und eine zu große Löslichkeit der Verfahrenskomponenten vermieden wird, weil sich sonst der härtbare Lackfilm und die Sperrschicht vermischen könnten.

Wird nur eine Polyesterharzschicht in einem Arbeitsgang ausgehärtet, wie etwa beim Lackieren, so erzielt man durch Paraffinzusätze beliebig niedere Styrolverluste. Paraffine weisen jedoach den Nachteil auf, daß sie zusätzlich als Trennmittel wirken. Dies bedeutet, daß in Gegenwart von Paraffinen ausgehärtete Polyesterharzschichten ein trübe, inerte Oberfläche aufweisen. Wird auf eine derartige Oberfläche weiteres ungesättigtes Polyesterharz aufgebracht und ausgehärtet, so erhält man einen ungenügenden Verbund und die beiden ausgehärteten Harzschichten lassen sich verhältnismäßig leicht voneinander trennen. Die Haftung wird um so schlechter, je besser ausgehärtet die Unterlage ist.

In der DE—AS 1 156 230 sind härtbare Formmassen beschrieben, die ungesättigte Polyester, polymerisierbare Verbindungen, übliche Hilfsstoffe, sowie eine Mischung von Wachsen enthalten. Diese Mischung enthält Wachse mit einem Schmelzpunkt über 75°C und solche mit einem Schmelzpunkt unter 75°C. Von den in der Beschreibung genannten Wachsen schmilzt keines unter 50°C. Mit derartigen Wachsgemischen läßt sich die Überlaminierbarkeit von ungesättigten Polyesterharzen nicht verbessern.

Die Überlaminierbarkeit von ungesättigten Polyesterharzen kann nach Angaben der DE—OS 25 54 930 und 27 05 966 durch den Zusatz von Wasser-in-Öl oder Öl-in-Wasser-Emulgatoren mit einem HBL von 1,5 bis 15 bzw. durch den Zusatz von flüssigen Alkanen oder deren Gemische zu wachsartigen Stoffen verbessert werden. Nachteilig an den beiden Methoden ist, daß die Haftung zwischen zwei Laminatschichten immer noch nicht voll befriedigend ist und daß die Polyesterharze nur ungenügend reproduzierbar hergestellt werden können.

Aufgabe der vorliegenden Erfindung war es, ungesättigte härtbare Polyesterharze zu entwickeln, bei denen die äthylenisch ungesättigten Monomerln bei der Verarbeitung nicht oder nur in untergeordnetem Maß verdunsten, ohne daß die Überlaminierbarkeit beeinträchtigt wird.

Überraschenderweise wurde gefunden, daß der Zusatz von Paraffinmischungen, bestehend aus einem Paraffin mit einem Schmelzpunkt zwischen 25 und 50°C und einem Paraffin mit einem Schmelzpunkt zwischen 51 und 100°C, zu ungesättigten Polyesterharzen die oben gestellten Anforderungen erfüllt.

Gegenstand der vorliegenden Erfindung sind somit härtbare, ungesättigte Polyesterharze aus
a) mindestens einem äthylenisch ungesättigten copolymerisierbaren Polyester,
b) mindestens einer äthylenisch ungesättigten copolymerisierbaren monomeren Verbindung,
c) einem wachsartigen Stoff, sowie gegebenenfalls
d) üblichen Aufbaukomponenten und Hilfsstoffen, die dadurch gekennzeichnet sind, daß sie als wachsartige Stoffe eine Paraffinmischung enthalten, die besteht aus 0,01 bis 0,5 Gew.% mindestens eines Paraffins mit einem Schmelzpunkt zwischen 25°C und 50°C und mindestens 0,01 bis 0,5 Gew.% eines Paraffins mit einem Schmelzpunkt zwischen 51 und 100°C, wobei sich die Prozentangaben auf des Gesamtgewicht der Komponenten a) und b) beziehen.

Die erfindungsgemäßen Polyesterharze weisen überraschenderweise den Vorteil auf, daß durch die spezielle Zusammensetzung der Paraffinmischung die Trennmittelwirkung aufgehoben wird, ohne daß die Monomerverdunstung verstärkt wird.

Die Herstellung der erfindungsgemäßen verdunstungsarmen, gut überlaminierbaren, härtbaren, ungesättigten Polyesterharze erfolgt in an' sich bekannter Weise durch Vermischen des Paraffingemischs mit den Polyesterharzkomponenten (a) — (d). Es hat sich als zweckmäßig erwiesen, das Paraffingemisch in einem äthylenisch ungesättigten Monomer, vorzugsweise Styrol, zu lösen und die erhaltene Monomerlösung dem Polyesterharz zuzudosieren.

Zu den zur Herstellung der erfindungsgemäßen verdunstungsarmen, gut überlaminierbaren, in Gegenwart üblicher Polymerisationsinitiatoren härtbaren ungesättigten Polyesterharze verwendbaren Ausgangskomponenten a) bis d) ist folgendes auszuführen:
a) Als ungesättigte Polyester eignen sich die üblichen Polykondensationsprodukte aus mehrwertigen, insbesondere zweiwertigen Carbonsäuren und deren veresterbare Derivate, insbesondere deren Anhydride, die mit mehrwertigen, insbesondere zweiwertigen Alkoholen esterartig verknüpft sind, und gegebenenfalls zusätzlich Reste einwertiger Carbonsäuren und/oder Reste einwertiger Alkohole und/oder Reste von Hydroxycarbonsäuren enthalten, wobei zumindest ein Teil der Reste über äthylenisch ungesättigte copolymerisierbare Gruppen verfügen muß.

Als mehrwertige, insbesondere zweiwertige, gegebenenfalls ungesättigte Alkohole eignen sich die üblichen, insbesondere acyclische Gruppen, cyclische Gruppen als auch beide Arten von Gruppen aufweisende Alkandiole und Oxalkandiole, wie z.B. Äthylenglykol, Propylenglykol-1,2, Propandiol-1,3, Butylenglykol-1,3, Butandiol-1,4, Hexandiol-1,6 2,2-Dimethylenpropandiol-1,3, Diäthylenglykol, Triäthylenglykol, Polyäthylenglykol, Cyclohexandiol-1,2, 2,2-Bis-(p-hydroxycyclohexyl-)propan, 1,4-Bismethylolcyclohexan, Vinylglykol, Trimethylolpropanmonoallyläther oder Butendiol-1,4.

Ferner können ein-, drei- oder höherwertige Alkohole, wie z.B. Äthylhexanol, Fettalkohole, Benzylalkohole, 1,2-Di-(allyloxy-) propanol (-3), Glycerin, Pentaerythrit oder Trimethylolpropan, in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische olefinische ungesättigte, vorzugsweise, $\alpha,\beta$-olefinisch ungesättigte Carbonsäuren, wei z.B. Maleinsäure, Fumarsäure, Itaconsaüre, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte sowie aromatische Carbonsaüren oder -derivate, wie z.B. Bernsteinsäure, Glutarsäure, $\alpha$-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure, oder Hexachlorendomethylentetrahydrophthalsäure, einkondensiert sein, ferner ein-, drei- und höherbasische Carbonsäuren, wie z.B. Äthylhexansäure, Fettsäuren, Methacrylsäure, Propionsäure, Benzoesäure, 1,2,4-Benzoltricarbonsäure oder 1,2,4,5-Benzoltetracarbonsäure.

Die ungesättigten Polyester werden im allgemeinen durch Schmelzkondensation oder Kondensation unter azeotropen Bedingungen aus ihren Komponenten hergestellt. Für das erfindungsgemäße Verfahren können amorphe und gegebenenfalls kristallisierbare ungesättigte Polyester verwendet werden.

Es hat sich im allgemeinen als zweckmäßig erwiesen, wenn die ungesättigten Polyester eine Säurezahl von 10 bis 100, vorzugsweise von 25 bis 60 sowie ein mittleres Molekulargewicht von etwa 600 bis 4 000, vorzugsweise von 800 bis 3 000, aufweisen.

Bezüglich der Zusammensetzung ungesättigter Polyester sei beispielsweise auch auf das Buch von H.V. Boenig, Unsaturated Polyesters: Structure and Properties, Amsterdam, 1964, verwiesen. Die für das erfindungsgemäße Verfahren zu verwendenden Formmassen enthalten im allgemeinen 10 bi 70, vorzugsweise 15 bis 50 Gewichtsprozent, bezogen auf die Komponente a) bis c) an ungesättigten Polyestern a).

b) Als copolymerisierbare äthylenisch ungesättigte monomere Verbindungen kommen die üblicherweise zum Herstellen ungesättigter Polyesterformmassen verwendeten Vinyl- und Allylverbindungen in Frage, wie Styrol, substituierte Styrole, wie p-Chlorstyrol oder Vinyltoluol, Ester der Acrylsäure und Methacrylsäure mit 1 bis 18 Kohlenstoffatome enthaltenden Alkoholen, wie z.B. Methacrylsäuremethylester, Acrylsäurebutylester, Äthylhexacrylat, Hydroxypropylacrylat, Dicyclopentadienylacrylat, Butandioldiacrylat und (Meth)-acrylsäureamide, Allylester, wie z.B. Diallylphthalat und Vinylester, wie z.B. Äthylhexansäurevinylester, Vinylpivalat und andere.

Desgleichen eignen sich Gemische der genannten äthylenisch ungesättigten Monomeren. Bevorzugt geeignet als Komponente (b) sind Styrol, Vinyltoluol, $\alpha$-Methylstyrol und Diallylphthalat. Die Komponente b) ist in den Polyesterharzen im allgemeinen in einer Menge von 5 bis 60, vorzugsweise von 10 bis 45 Gewichtsprozent, bezogen auf die Mischung der Komponenten a) + b), enthalten.

c) Als unter den Punkt c) fallende wachsartige Stoffe, die für die Paraffinmischung verwendbar sind, werden erfindungsgemäß mindestens ein Paraffin mit einem Schmelzpunkt von 25 bis 50°C, vorzugsweise von 46° bis 48°C und mindestens ein Paraffin mit einem Schmelzpunkt von 51° bis 100°C, vorzugsweise 56° bis 58°C gemischt.

Anstelle der Paraffine können jedoch auch andere wachsartige Stoffe, beispielsweise die als sogenanntes Montanwachs bekannten Paraffinoxidationsprodukte, bzw. deren Ester, Carnaubawachs, langkettige Fettsäuren, wie Stearinsäure, Stearylstearat, Ceresin und dgl. eingesetzt werden.

d) Als Aufbaukomponenten und Hilfsstoffe entsprechend Punkt d, wie sie gegebenenfalls üblicherweise bei ungesättigten Polyesterharzen Anwendung finden, kommen beispielsweise in Betracht: Verdickungsmittel, Inhibitoren, Füllstoffe, Verstärkungsmittel sowie gegebenenfalls inerte Lösungsmittel, Polymerisationsbeschleuniger, schrumpfungsmindernde Zusätze und weitere üblicherweise bei der Verarbeitung von Polyesterharzen verwendete Hilfsstoffe.

Als Verdickungsmittel seien beispielhaft genannt: Erdalkalioxide oder -hydroxide, wie Calciumoxid, Calciumhydroxid, Magnesiumhydroxid und vorzugsweise Magnesiumoxid sowie Gemische dieser Oxide und/oder Hydroxide. Die Erdalkalioxide können auch teilweise durch Zinkoxid ersetzt sein. Der Gehalt an Verdickungsmitteln in den Polyesterharzen beträgt im allgemeinen 0,5 bis 5, vorzugsweise 1 bis 3 Gewichtsprozent, bezogen auf die Mischung der Komponenten (a) und (b).

Als Inhibitoren kommen die üblichen in Frage, wie z.B. Hydrochinon, tert.-Butylbrenzkatechin, p-Benzochinon, Chloranil, Nitrobenzole, wie m-Dinitrobenzol, Thiodiphenylamin oder Salze von N-Nitroso-N-cyclohexylhydroxylamin sowie deren Gemische. Die Inhibitoren sind in den Polyesterharzen im allgemeinen in einer Menge von 0,005 bis 0,2 vorzugsweise 0,01 bis 0,1 Gewichtsprozent, bezogen auf die Komponenten a) und b), enthalten.

Geeignete Füllstoffe sind z.B. übliche feinpulverige oder körnige anorganische oder organische Füllstoffe, wie Kreide, Kaolin, Quarzmehl, Dolomit, Schwerspat, Metallpulver, Zement, Talkum, Kieselgur, Holzmehl, Holzspäne, Pigmente und dergleichen.

Als Verstärkungsmittel kommen in Frage anorganische oder organische Fasern oder flächige, gegebenenfalls daraus gewebte Gebilde, z.B. solche aus Glas, Asbest, Zellulose und synthetischen organischen Hochpolymeren, wie Polyestern und Polyamiden.

Die Füll- und Verstärkungsstoffe können in Mengen von 5 bis 200 Gewichtsprozent, bezogen auf die Komponenten a) und b), verwendet werden.

Als weiterhin gegebenenfalls mitzuverwendende inerte Lösungsmittel kommen Ketone, Ester, Kohlenwasserstoffe in Mengen bis zu 100 Gewichtsprozent, bezogen auf die Komponente a), in Frage.

Die ungesättigten Polyesterharze können vorbeschleunigt sein. Als Polymerisationsbeschleuniger kommen beispielsweise Schwermetallsalze wie Kobalt und Vanadinsalze, tertiäre aromatische Amine, 1,3-Diketonverbindungen wie Acetylaceton, ß-Ketoester, wie Acetessigsäureäthylester und ß-Ketoamide wie Acetessigsäurediäthylamid und Kombinationen dieser Verbindungen in Frage.

Gegegenenfalls mitzuverwendende schrumpfungsmindernde Zusätze sind beispielsweise thermoplastische Polymere wie Polystyrol, Styrolcopolymerisate, Polyvinylacetate und/oder Poly(meth)acrylate. Vorzugsweise verwendet werden thermoplastische Polymerisate die Carboxylgruppen in Mengen von 1 bis 5 Gewichtsprozent, bezogen auf das Gesamtgewicht, in der Polymerkette gebunden enthalten. Die schrumpfungsmindernden Zusätze werden üblicherweise in Mengen von 1 bis 30, vorzugsweise 8 bis 15 Gewichtsprozent, bezogen auf das Gewicht der Komponenten (a) und (b), verwendet.

Das Vermischen der Einzelkomponenten (a) bis (d) und das Zumischen der Paraffingemische kann unter Verwendung üblicher Mischaggregate erfolgen, beispielsweise mit einem Rührwerk oder einem Walzenstuhl. Derartig hergestellte ungesättigte Polyesterharze lassen sich mit Polymerisationsinitiatoren, wie Peroxide, Azoverbindungen u.a., evtl. in Gegenwart von Polymerisationsbeschleunigern oder Cobeschleunigern bzw. Promotoren oder durch Bestrahlung, beispielsweise mit Licht, durch UV-Strahlung oder beschleunigte Elektronenstrahlen evtl. in Gegenwart von Lichtinitiatoren und Sensibilisatoren härten.

Die erfindungsgemäßen ungesättigten Polyesterharze eignen sich zur Herstellung von Überzügen, Feinschichten und Formstoffen ohne und mit Verstärkungsmaterialien sowie gegebenenfalls Füllstoffen.

Besonders vorteilhaft ist ihre Verwendung zur Herstellung von Formteilen durch Laminieren, beispielsweise im Handverfahren oder Faserspritzverfahren sowie überall dort, wo bei Verwendung praffinfreier ungesättigter Polyesterharze eine besonders hohe Konzentration flüchtiger Monomerer am Arbeitsplatz auftritt bzw. die Monomerenemission sehr hoch ist.

Die in den Beispielen angegebenen Teile und Prozente sind Gewichtsteile bzw. Gewichtsprozente.

Ungesättigtes Polyesterharz:

Polyesterharz A ist eine mit 0,01 % Hydrochinon stabilisierte 66 %ige styrolische Lösung eines ungesättigten Polyesters mit einer Säurezahl von 50, der durch Schmelzkondensation bei 190 bis 210°C in Gegenwart einer Inertgasatmosphäre aus Maleinsäure, o-Phthalsäure und Propylenglykol-1,2 im Molverhältnis 1 : 2 : 3 hergestellt wurde. Der Isomerisierungsgrad Maleinsäure — Fumarsäure betrug 95 %.

Polyesterharz B wird analog den Angaben des Polyesterharzes A hergestellt, wobei jedoch zur Herstellung des ungesättigten Polyesters die Ausgangskomponenten Maleinsäure, o-Phthalsäure und Propylenglykol-1,2 im Molverhältnis 1 : 0,5 : 1,5 kondensiert werden. Der Isomerisierungsgrad betrug 95 %.

Polyesterharz C wird analog den Angaben des Polyesterharzes A hergestellt, wobei jedoch zur Herstellung des ungesättigten Polyesters die Ausgangskomponenten Maleinsäure, Isophthalsäure, Neopentylglykol im Molverhältnis 1 : 1 : 2 kondensiert werden. Der Isomerisierungsgrad betrug 90 %.

Polyesterharz D wird analog den Angaben des Polyesterharzes A hergestellt, wobei jedoch zur Herstellung des ungesättigten Polyesters die Ausgangskomponenten Maleinsäure, Tetrahydrophthalsäure, Phthalsäure Diäthylenglycol, Propylenglycol im Molverhältnis 1 : 0,5 : 0,5 : 1,0 : 1,0 kondensiert werden. Der Isomerisierungsgrad betrug 95 %.

Polyesterharz E wird analog den Angaben des Polyesterharzes A hergestellt, wobei jedoch zur Herstellung des ungesättigten Polyesters die Ausgangskomponenten Maleinsäure, Isophthalsäure, Diäthylenglycol, Propylenglycol im Molverhältnis 1 : 1 : 1 : 1 kondensiert werden. Der Isomerisierungsgrad betrug 95 %.

Messung der Monomerverdunstung:

In einer planen Schale mit niedrigem Rand (z.B. 25 × 25 × 0,3 cm) wird Polyesterharz verteilt, daß eine gleichmäßig 2 mm dicke Schicht entsteht. Zur Bestimmung der Monomerverdunstung wird der Gewichtsverlust innerhalb einer Stunde bei 23 ± 1°C ermittelt.

Prüfung der Überlaminierbarkeit:

Praxisnaher Test:

Eine 3 mm dicke glasfaserverstärkte ungesättigte Polyesterharzschicht, bestehend aus 3 Lagen Glasfasermatte, wird unter Verwendung von 1 % Methyläthylketonperoxid (50 %ig in Dimethylphthalat) und 0,2 bis 0,5 % 1 %iger Kobaltoctoatlösung in Styrol (1 % Kobaltgehalt) bei einer Raumtemperatur von 23 ± 1°C gehärtet.

Nach genau 24 Stunden wird 1/3 der oberen Laminatfläche mit Folie abgedeckt (Ansatzpunkt für spätere Reißprobe) und eine gleiche 3 mm starke glasfaserverstärkte ungesättigte Polyesterharzschicht überlaminiert. Nach weiteren 24 Stunden wird von Hand das obere Laminat vom unteren abgezogen.

Beispiele 1 bis 8 und Vergleichsversuche a bis f

Die Polyesterharze A und B wurden mit Paraffinen versetzt, deren Erweichungsbereich zwischen 32°C und 96°C lag.

Die verwendeten Paraffine und die zugesetzten Mengen in Gewichtsprozent, bezogen auf das Gewicht an Polyesterharz, sind in der folgenden Tabelle zusammengefaßt.

Wie aus der Tabelle zu entnehmen ist, weisen die nicht erfindungsgemäß hergestellten Vergleichsversuche a, b, d und e eine gute Lagenhaftung, jedoch große Styrolverdunstung und die Vergleichsversuche c und f eine geringe Styrolverdunstung und schlechte Lagenhaftung auf.

TABELLE

| Beispiel bzw Vergleichs-versuch | | Polyesterharz | Erweichungsbereich der Paraffine [°C] | | | | Styrolver-dunstung [g/m². h] | Lagenhaftung + = gut − = schlecht |
|---|---|---|---|---|---|---|---|---|
| | | | 32 | 46—48 | 69—73 | 92—96 | | |
| 1 | | A | 0,4 | — | 0,2 | — | <5 | + |
| 2 | | A | 0,4 | — | — | 0,1 | <5 | + |
| 3 | | A | — | 0,3 | 0,2 | — | <5 | + |
| 4 | | A | — | 0,3 | — | 0,1 | <5 | + |
| | a | A | — | — | — | — | 70—80 | + |
| | b | A | 0,6 | — | — | — | 70—80 | + |
| | c | A | 0,2 | 0,4 | — | — | <5 | − |
| 5 | | B | 0,3 | — | 0,3 | — | <5 | + |
| 6 | | B | 0,4 | — | — | 0,1 | <5 | + |
| 7 | | B | — | 0,3 | 0,2 | — | <5 | + |
| 8 | | B | — | 0,4 | — | 0,1 | <5 | + |
| | d | B | — | — | — | — | 70—80 | + |
| | e | B | 0,6 | — | — | — | 70—80 | + |
| | f | B | 0,2 | 0,4 | — | — | <5 | − |
| 9 | | C | 0,3 | — | 0,3 | — | <5 | + |
| 10 | | C | 0,5 | — | — | 0,2 | <5 | + |
| 11 | | C | — | 0,1 | 0,3 | — | <5 | + |
| 12 | | C | — | 0,2 | — | 0,3 | <5 | + |
| | g | C | — | — | — | — | 70—80 | + |
| | h | C | — | — | — | — | 70—80 | + |
| | i | C | 0,2 | 0,3 | — | — | <5 | − |
| 13 | | D | 0,3 | — | 0,2 | — | <5 | + |
| 14 | | D | 0,4 | — | — | 0,3 | <5 | + |
| 15 | | D | — | 0,3 | 0,2 | — | <5 | + |
| 16 | | D | — | 0,2 | — | 0,2 | <5 | + |
| | k | D | — | — | — | — | 70—80 | + |
| | l | D | 0,5 | — | — | — | 70—80 | + |
| | m | D | 0,1 | 0,3 | — | — | <5 | − |

TABELLE (Fortsetzung)

| Beispiel bzw Vergleichs-versuch | Polyesterharz | Erweichungsbereich der Paraffine [°C] | | | | Styrolver-dunstung [g/m². h] | Lagenhaftung + = gut − = schlecht |
|---|---|---|---|---|---|---|---|
| | | 32 | 46—48 | 69—73 | 92—96 | | |
| 17 | E | 0,2 | — | 0,2 | — | <5 | + |
| 18 | E | 0,2 | — | — | 0,1 | <5 | + |
| 19 | E | — | 0,3 | 0,2 | — | <5 | + |
| 20 | E | — | 0,2 | — | 0,2 | <5 | + |
| n | E | — | — | — | — | 70—80 | + |
| o | E | 0,5 | — | — | — | 70—80 | + |
| p | E | 0,1 | 0,2 | — | — | <5 | − |

## Patentansprüch

Härtbare ungesättigte Polyesterharze, ethaltend

a) mindestens einen äthylenisch ungesättigten copolymerisierbaren Polyester
b) mindestens eine äthylenisch ungesättigte copolymerisierbare monomere Verbindung
c) wachsartige Stoffe, sowie gegebenfalls
d) übliche Aufbaukomponenten und Hilfsstoffe,

dadurch gekennzeichnet, daß die Polyesterharze als wachsartige Stoffe eine Paraffinmischung enthalten, die besteht aus 0,01 bis 0,5 Gew.% mindestens eines Paraffins mit einem Schmelzpunkt zwischen 25°C und 50°C und 0,01 bis 0,5 Gew.% eines Paraffins mit einem Schmelzpunkt zwischen 51°C und 100°C, wobei sich die Prozentangaben auf das Gesamtgewicht der Komponenten a) und b) be-ziehen.

## Revendication

Résines durcissables de polyesters insaturés, contenant

a) au moins un polyester copolymérisable insaturé éthyléniquement,
b) au moins un composé monomère copolymérisable insaturé éthyléniquement,
c) des substances cireuses et, le cas échéant,

d) d'autres éléments constitutifs et agents auxiliaires usuels caractérisées en ce qu'elles contiennent, en tant que substances cireuses, un mélange de paraffines qui se compose de 0,01 à 0,5 % en poids d'au moins une paraffine dont le point de fusion se situe entre 25°C et 50°C et de 0,01 à 0,5 % en poids d'une paraffine dont le point de fusion est compris entre 51°C et 100°C, ces pourcentages se rapportant au poids total des éléments a) et b).

## Claims

Curable unsaturated polyester resins containing

a) at least one ethylenically unsaturated copolymerizable polyester,
b) at least one ethylenically unsaturated copolymerizable monomeric compound
c) waxy materials, with or without
d) conventional components and auxiliaries, wherein the polyester resins contain, as waxy materials, a paraffin mixture consisting of 0.01 to 0.5 per cent by weight of at least one paraffin with a melting point of between 25°C and 50°C and 0.01 to 0.5 per cent by weight of a paraffin with a melting point of between 51°C and 100°C, the percentages referring to the total weight of components a) and b).